# EUROPEAN PATENT APPLICATION

(11) **EP 1 503 565 A1**
(43) Date of publication of application: **02.02.2005**
(21) Application number: 03725730.0
(22) Date of filing: 02.05.2003
(51) Int. Cl.: H04M 1/03

(54) **WRIST-MOUNTED PORTABLE TELEPHONE SET**

(30) Priority: 02.05.2002 JP 2002130952
(71) Applicant: Temco Japan Co., Ltd., Tokyo 168-0062 (JP)
(72) Inventor: TAKEDA, Takeshi, c/o TEMCO JAPAN CO., LTD., Tokyo 168-0062 (JP); AKITA, Michio, Shibuya-ku, Tokyo 151-0066 (JP)
(74) Representative: de Roquemaurel, Bruno
(86) International application number: PCT/JP2003/005608
(87) International publication number: WO 2003/094487

(57) **Abstract**

A wrist-mounted portable cellular telephone set has its constituent elements separated from each other. Indispensable ones of the elements are collected to form a portable section, which is mountable on a person's wrist. The remaining ones of the elements are collected to form an independent body. As a result, the wrist-mounted portable cellular telephone set is improved in design, comfortableness in wear, and in operability. The independent body forms a stationary section, which is provided with a character input means and separated from the portable section. The portable section is provided with all the function of a cellular phone other than those functions already provided in the stationary section. The wrist-mounted portable cellular telephone set is constructed of the stationary section and the portable section. A character input control signal is transmitted from a character input means of the stationary section to a display panel of the portable section.

## Description

### FIELD OF THE INVENTION:

The present invention relates to a wrist-mounted portable telephone set, and more particularly to a wrist-mounted portable cellular telephone set connected with a character's information input unit, wherein: the input unit forms an independent unit which may be separately disposed from the telephone set; and, a user of the telephone set may input character' s information to the telephone set through the input unit.

### TECHNICAL FIELD:

In a so-called "ubiquitous society", it is required for hardware to be wearable. As for a portable cellular telephone too, it is ideal for a user of the portable cellular telephone to put the phone within his/her reach so that he/she can answer a phone call immediately.

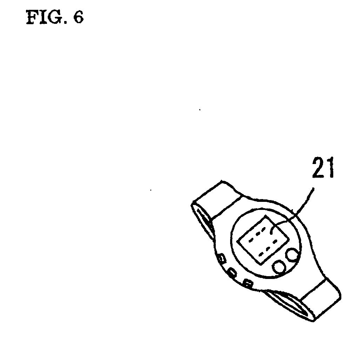

Consequently, a conventional wrist-mounted type of portable cellular telephone shown in Fig. 6 and worn on the user's wrist in a similar manner as that for a wrist watch has been proposed. In use, the user mounts the wrist-mounted type of portable cellular telephone on his/her wrist by using a wrist-mounting means, and, in this state, communicates with his/her communication partner through the portable phone.

However, the conventional wrist-mounted type portable cellular telephone shown in Fig. 6 is disadvantageous in that: although its display panel 21 has no problem when the user checks his/her communication partner's phone number and the like on this display panel 21 during communication with his/her communication partner using his/her own voice, its tiny display panel 21 is insufficient in clearly displaying the E-mail messages and information obtained through the Internet and the wrist-mounted portable cellular telephone.

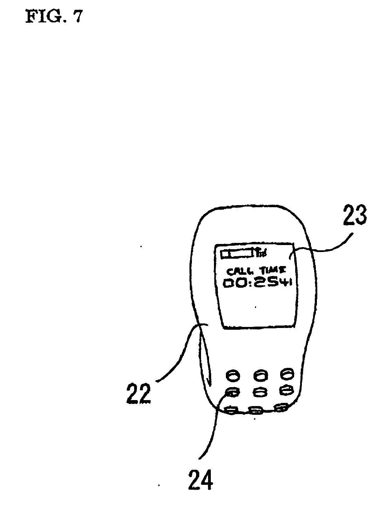

On the other hand, there is another conventional wrist-mounted portable cellular telephone. As shown in Fig. 7, this another conventional portable cellular telephone provided with: a curved housing 22 which extends along a person's wrist and is provided with a display panel 23 and a plurality of buttons 24 in its front surface; a radio transmitting/receiving circuit; a microphone; and, a loudspeaker, wherein all the radio transmitting/receiving circuit, the microphone and the loudspeaker are incorporated in the housing 22.

This wrist-mounted portable cellular telephone is larger in size of the display panel than the other conventional portable cellular telephone of Fig. 6, and therefore advantageous in this respect, but disadvantageous in that: since its display panel 23, buttons 24 and like components are closely packed in a relatively narrow area of the front surface of the housing, the buttons 24 is not sufficiently spaced apart from each other. Further, this wrist-mounted portable cellular telephone is disadvantageous also in that: each of its buttons 24 is too small in width, which makes it difficult for the user to manually operate these buttons 24 in a precise manner through his/her fingers. This forces the user to use his/her pens or like pointed tools in operating each of these buttons.

Further, as for these conventional wrist-mounted portable cellular telephones: since their constituting elements such as displaypanels, batteries, operating switches, antennas, electronic devices used in radio communication, electronic devices used in controlling signals, and like components are integrally incorporated in the wrist-mounted portable cellular telephone, each of the wrist-mounted portable cellular telephone becomes too complicated in construction and too large in size, which impairs the conventional wrist-mounted portable cellular telephone in portability and also in design freedom.

Due to this, there are recognized a certain restriction on the size of wrist-mounted portable cellular telephone which should be comfortably worn on the person's wrist. Thismakes it substantially impossible to mount, in the housing, all the above constituting elements such as the radio receiving circuit, display panel, microphone, loudspeaker, batteries and like components together with the buttons for inputting both the phone numbers and characters to the wrist-mounted portable cellular telephone. If these components are mounted in the housing of the wrist-mounted portable cellular telephone, the wrist-mounted portable cellular telephone thus constructed becomes poor in operability.

In view of the problems inherent in the conventional wrist-mounted portable cellular telephone, the present invention was made. Consequently, it is an object of the present invention to provide a wrist-mounted portable cellular telephone set excellent in design and comfortableness in wear and also in operability, wherein: constituent elements or components of the wrist-mounted portable cellular telephone are separated from each other; only indispensable ones of the thus separated constituent elements are collected to form a portable section worn on a person's wrist; and the remaining ones of the constituent elements are collected to form a separate section, whereby the wrist-mounted portable cellular telephone set of the present invention is improved in design, comfortableness in wear and also in operability.

### SUMMARY OF THE INVENTION

In order to solve the above problems, the wrist-mountedportable cellular telephone set of the present invention comprises: a stationary section including a character input means; and, a wrist-mountable portable section forming an independent body separated from the stationary section, wherein the wrist-mountable portable section is provided with all the cellular phone's functions other then those functions provided in the stationary section. The wrist-mounted portable cellular telephone set of the present invention is CHARACTERIZED BY having a construction in which: a character input signal is transmitted from a character input means to a display panel of the portable section.

Preferably: a loudspeaker, a microphone, ones of operating switches and a battery are properly arranged in the portable section in addition to the display panel; the display panel is disposed in an inner surface of an upper lid covering a housing of the portable section; the display panel is curved at a predetermined radius of curvature; aportion, in which the microphone is incorporated, serves also as an opening/closing portion of the band; the loudspeaker connected with the housing is detachably mounted on the housing or on the band; the loudspeaker is constructed of a bone conduction loudspeaker; the bone conduction loudspeaker is detachably mounted on a person's fingertip; the battery is incorporated in the band; and, the stationary section is provided with a charging function.

### BRIEF DESCRIPTION OF THE DRAWINGS

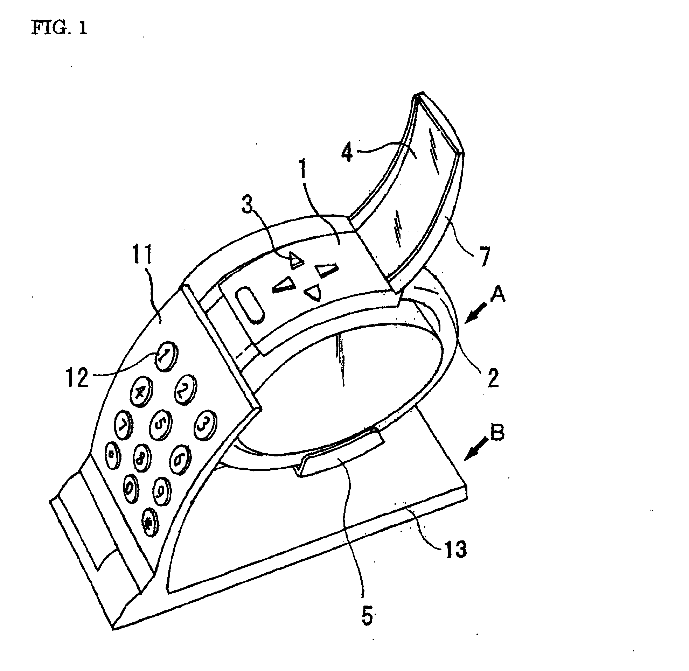

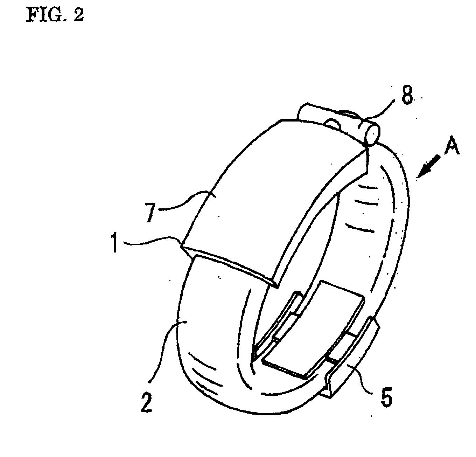

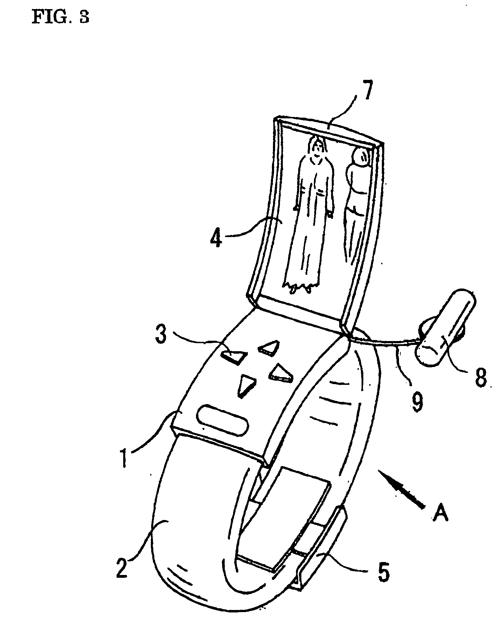

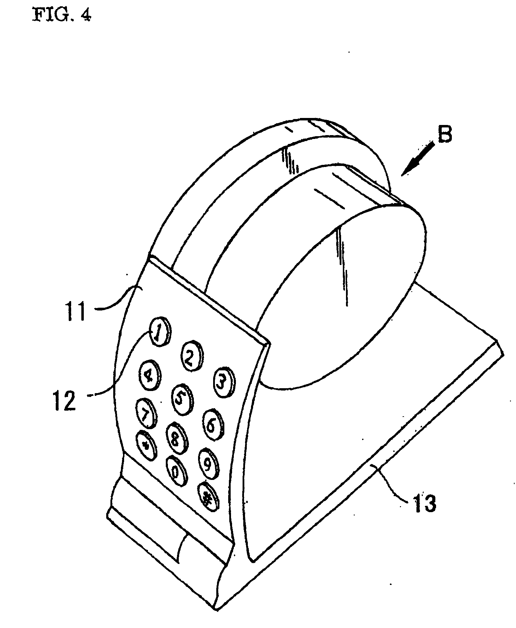

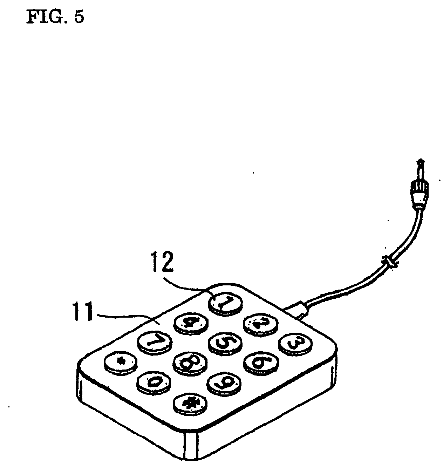

Fig. 1 is a perspective view of the wrist-mounted portable cellular telephone set of the present invention, illustrating the coupled state of the wrist-mounted portable cellular telephone set. Fig. 2 is a perspective view of the wrist-mounted portable cellular telephone set of the present invention, illustrating one of construction examples of a portable section (with its lid portion closed) of the wrist-mounted portable cellular telephone set. Fig. 3 is a perspective view of the wrist-mounted portable cellular telephone set of the present invention, illustrating one of construction examples of a portable section (with its lid portion opened) of the wrist-mounted portable cellular telephone set. Fig. 4 is a perspective view of the wrist-mounted portable cellular telephone set of the present invention, illustrating one of construction examples of a stationary section of the wrist-mounted portable cellular telephone set. Fig. 5 is a perspective view of one of examples of a character input unit used in the wrist-mounted portable cellular telephone set of the present invention. Fig. 6 is a perspective view of one of construction examples of the conventional type of wrist-mounted portable cellular telephone. Fig. 7 is a perspective view of another of construction example of the conventional type of wrist-mounted portable cellular telephone.

### BEST MODE FOR CARRYING OUT THE INVENTION.

With reference to the accompanying drawings, embodiments of the present invention will be described. A wrist-mounted portable cellular telephone set of thepresent invention comprises: a portable section "A" constructed of indispensable ones of constituent elements of the portable cellular telephone set, which indispensable ones are required in performing a voice-transmitting/receiving operation; and, a stationary section B constructed of the remaining constituent elements of the portable cellular telephone set; wherein the stationary section comprises a character input portion through which a user of the portable cellular telephone set can input desired characters to the portable cellular telephone set. When the user wishes to input the characters, the portable section "A" of the portable cellular telephone is coupled to the character input unit of the stationary section B of the same portable cellular telephone, which stationary section B is separated from the portable section "A". This enables the user to input his/her selected characters to the portable cellular telephone by using the character input buttons of the character input unit.

Fig. 1 is a perspective view of the wrist-mounted portable cellular telephone set of the present invention, illustrating one of construction examples of the wrist-mounted portable cellular telephone set. Each of Figs. 2 and 3 is a perspective view of one of construction examples of the portable section "A" of the wrist-mounted portable cellular telephone set shown in Fig. 1, wherein the portable section "A" includes the character input portion. Fig. 5 is a perspective view of another embodiment of the character input portion.

The portable section "A" is substantially constructed of: a housing 1; and, a finger-ring-shaped or band-shaped band 2. The portable section "A" is mounted on a person's wrist through the band 2. On the other hand, in general, the housing 1 is formed into a substantially rectangular shaped casing-like body, which is small in thickness and made of metal, plastics or any other engineering material capable of being subjected to working/forming processes. Particularly, when the housing 1 is made of magnesium alloys, it is expected that the housing 1: assumes a metallic high-grade appearance; is reduced in weight while increased in strength; is excellent in heat dissipation performance and improved in electromagnetic shielding performance. Further, preferably the housing 1 is curved inwardly at a predetermined radius of curvature so as to extend along the person's wrist.

As for the band 2, in order to detachably mount the band 2 on the person's wrist, the band 2 is provided with a buckle 5 or fastener. Such a buckle 5 or fastener is provided with a lock means and is heretofore employed in a wrist watch as a wrist band. It is also possible to provide a hollow portion in the buckle 5, in which hollow portion a microphone may be contained in construction.

In general, the buckle 5 is oppositely disposed from the housing 1 on the same band 2. When the band 2 is mounted on the person's wrist, the lock means of the band 2 is released from its locked condition to permit the band 2 to expand its opposite ends outward, so that the person's wrist may pass through the band 2. After the wrist passes through the band 2, the lock means of the band 2 is locked again to prevent the band 2 from dropping out of the wrist. When the microphone is incorporated in the buckle portion 5 of the band 2, it is desirable to dispose the microphone in the side of an outer surface of the band 2.

An upper lid 7 is movably mounted on one of side portions of an upper surface of the housing 1 through a hinge member in a manner such that the upper lid 7 is capable of being closed and opened. A display panel 4 is disposed on a rear surface of the upper lid 7. As is in the case of the housing 1, preferably the upper lid 7 is also curved at a predetermined radius of curvature. As for the display panel 4, it is preferably that the display panel 4 is constructed of an organic EL display panel. In this case, since any back light is not required, the organic EL display panel is capable of reducing its thickness in an easy manner, and released from any restriction on the angle of visibility thereof, which means that: even if the user observes the display panel in a direction substantially in parallel with the display panel, he/she can't recognize any change in image quality on the display panel. These are advantages inherent in the organic EL display panel.

Further, of the operating switches of the wrist-mounted portable cellular telephone, those indispensable operating switches 3 used in operating the portable section "A" are disposed in the front surface of the portable section "A". Each of these operating switches 3 is used in manually inputting the input signals to the portable section "A", and is constructed of a tact switch, a light touch switch or the like. In case that any'one of the tact switches, light touch switches and the like is used, it is preferable to use a so-called "illuminated-type" switch a button of which is illuminated from a back side thereof.

The switches 3 may vary in shape and in function. For example, the switches 3 are formed into various projecting shapes such as a triangular shape, an oval-shape and the like, so as to facilitate the user's manual operation of these switches3 using his/her fingertips, wherein the switches 3 comprise an upper, a lower, a right and a left arrow button in addition to a decision button. By combining each of these arrow buttons with the decision button, it is possible for the user of the wrist-mounted portable cellular telephone to set and clear any mode of the telephone's functions such as: a registration function in the address book; a communication function through the address book; a dial-lock function; an off-hook function; an on-hook function; a redial function; and, a so-called "manner mode" function, together with any other modes of functions performed by a conventional type of wrist-mounted portable cellular telephone.

Although not shown in the drawings, a number of electronic components are incorporated in the housing 1. Further, also an antenna is often incorporated in the housing 1 together with these electronic components. These electronic components comprise, for example: a special-purpose processor (DSP: Digital Signal Processor), which is specialized in function in processing a digital signal; a liquid crystal driver IC; a flash memory; a quartz device; a laminated chip condenser; a chip resistor; a multi-layer chip inductor; a compact isolator; a high-pass filter; a connector; a built-up multi-layer printed circuit board; a tape carrier package; a switching regulator; an auxiliary power source for a memory backup use; a miniature or micro motor; and, like electronic components.

Connected to the special-purpose processor are: the switches 3; a speech recognition circuit; and, the display panel 4 such as the liquid crystal display and the like. In operation, the special-purpose processor analyzes a speech instruction when these switches 3 are depressed by the user in operation, or upon receipt of a speech instruction from the microphone. The microphone is contained in a portion for receiving the microphone therein, which portion is arranged inside the housing 1. Then, the special-purpose processor issues an instruction signal to the radio transmitting/receiving portion. According to this instruction signal, the transmitting/receiving portion issues an output signal, which forces the display panel 4 to display on its screen: indication of power-on state; indication of dials; indication of a communication state; indication of a holding state; and, any other indication of necessary information, which information corresponds to the operated ones of the switches 3 and is required in operating the wrist-mounted portable cellular telephone.

Incidentally, a bone conduction type loudspeaker 8 is connected with the housing 1 through a read wire 9. As for the type of the loudspeaker, the loudspeaker may be constructed also of a sound-pressure type earphone. When the loudspeaker is constructed of the sound-pressure type earphone, it is necessary for the user to mount the earphone on his/her ear each time he/she receives a phone call. Further, such an earphone is poor in design of its configuration. Due to this, in the present invention, preferably the bone conduction type loudspeaker is employed. In this case, it is possible to modify the casing of the bone conduction type loudspeaker in configuration so as to suitably correspond to the main body of the portable section in design. This makes it possible to improve the portable cellular telephone set of the present invention in design and to permit the set to become a more improved product in fashionability.

In this case, the user may hold the bone conduction type loudspeaker 8 using his/her fingers when he/she answers a phone call. Alternatively, a finger-ring type holder is mounted on a rear surface of a vibrating surface of the loudspeaker 8 to make it possible for the user to have the loudspeaker 8 slightly pressed against his/her temple and its vicinities. This enables the user to clearly catch a speech of his/her communication partner even when the user is in a noisy environmental area during the phone communication. Further, in appearance of the user in communication using such loudspeaker 8, it is so natural as it may seem to outsiders.

Although the bone conduction type loudspeaker 8 is directly connected with the housing 1 through the lead wire in the above embodiment, it is also possible to connect the loudspeaker 8 with the housing 1 through radio means such as infrared rays and the like. In any case, the bone conduction type loudspeaker 8 is detachably mounted on the housing 1 or on the band 2.

Incidentally, although the upper lid 7 mayvary in configuration in its design, preferably, as described in the above embodiment, the upper lid 7 is curved inwardly at a predetermined radius of curvature in construction so that the user has the portable section of his/her portable cellular telephone set to fit his/her wrist without feeling any physical disorder. In this case, preferably a display device of the display panel is flexible in construction.

On the other hand, the stationary section B, which is formed into an independent body separated from the portable section "A", has a predetermined size and an arbitrary shape both suitable for desk-top use, and is provided with the character input portion 11 which is connected with the switches 3 of the housing 1. Disposed in this character input portion 11 is an alphanumeric input switch 12. When the character input portion 11 is connected with the housing 1, it becomes possible for the user to write the necessary information such as the phone numbers and the like into the memory and also possible for the user to input his/her message and the like to his/her portable cellular telephone set.

In charging the battery of the portable section "A", it is possible to use a battery charger, which is an independent charger separated from the portable section "A". It is also possible for the stationary section B to have a battery charging function. Fig. 4 shows one of examples of this type stationary section B, which is capable of performing a battery charging function. Although not shown in the drawings, the charging terminals of the battery are provided in an upper surface of the base member 13.

Provided in this stationary section B is the input switch 12 whichmakes it possible for the user to use the wrist-mounted portable cellular telephone of thepresent invention as a fixed-line telephone. Even when the battery of the portable cellular telephone is charged, it is possible for the user to call up and answer a phone call by means of the portable cellular telephone. In addition, it is also possible for the user to write information into the memory of the housing land input his/her character message to theportable cellular telephone by means of the input switch 12.

Incidentally, although the character input portion 11 is of a stand type in the above example, it is also possible to form the character input portion 11 into a ten-key pad shape in construction. The character input portion 11 formed into such a ten-key pad shaped portion is connectedwith the portable section "A" when the characters are inputted (See Fig. 5).

Next, the wrist-mounted portable cellular telephone set of the present invention will be described in use. When the user goes out of doors, the portable section "A" of the portable cellular telephone set is mounted on the user's wrist in a manner such that the housing 1 is brought into contact with an outer surface of the user's left hand wrist. Under such circumstances, the buckle 5, in which the microphone mounted on the band 2 is incorporated, is positioned in the side of an inner surface of the user's wrist.

Then, in a normal condition, information contents ("stand-by" screen) similar to those displayed in the conventional wrist-mounted portable cellular telephone are displayed on the display panel 4 mounted on the upper lid 7 of the housing 1 (in a condition in which the display panel 4 has its upper lid 7 opened, as viewed in Fig. 3.

In calling the user' s communication partner up on the portable cellular telephone, it is necessary for the user to open first the upper lid 7, and then turn on the speech recognition circuit. After that, the bone conduction type loudspeaker 8 is separated from the housing 1 or band 2 and mounted on the fingertip of the user. Then, for example, according to a speech instruction issued from the microphone incorporated in the buckle portion 5 of the band 2, the phone number of the user's communication partner having been stored in the memory is retrieved from the memory. After that, according to the speech instruction, a communication link is established so that the portable phone has its operation mode changed from a normal mode to a communication mode. At this time, in general, the display on the displaypanel 4 is changed to display the necessary information such as the partner's phone number, the indication of communication mode and the like on its screen.

Under such circumstances, when the communication partner is called up, it is possible for the user to enjoy his/her communication with his/her partner without uncomfortably bending his/her arm in a condition in which the user brings the microphone near his/her mouth and slightly presses the bone conduction loudspeaker 8 against his/her temple and its vicinities, which enables the user to enjoy the communication in his/her relax position.

After completion of the communication, the upper lid 7 is closed to change the portable phone from its communication mode to its stand-by mode. Alternatively, the communication mode is cleared according to the speech instruction. Finally, the bone conduction loudspeaker 8 is returned to its mount portion on which the loudspeaker 8 is detachably mounted.

On the other hand, when the user is called up, it is possible for the user to catch such phone call through activation of a vibration buzzer, which is disposed in the casing 1, for example. Consequently, the user opens the upper lid 7 to confirm receipt of the phone call. By opening the upper lid 7, the speech recognition circuit of the housing 1 is turned on. Then, the bone conduction loudspeaker 8, which is detachably mounted on the housing 1 or band 2, is removed from the housing 1 or band 2. Then, according to the speech instruction, the communication link is established to permit the communication to start.

Consequently, the user slightly presses the bone conduction loudspeaker 8 against his/her temple and its vicinities to catch the speech communication of his/her partner. At this time, since the inside of his/her wrist is brought near the mouth of the user, it is possible to pick up his/her speech by means of the microphone incorporated in the buckle portion 5 of the band 2, and therefore possible to transmit his/her speech to the communication partner. After completion of the phone communication, the upper lid 7 is closed so that the portable phone has its operation mode changed from the communication mode to the stand-by mode. Alternatively, according to the speech instruction, the communication mode is cleared. Finally, the bone conduction loudspeaker 8 is returned to its mount portion.

### INDUSTRIAL APPLICABILITY:

The present invention is described above. In the wrist-mounted portable cellular telephone set of the present invention, it is possible to arrange the display panel over the entire surface of the interior of the upper lid, which entire surface is relatively large inarea. Due to this, it is possible to provide the wrist-mounted portable cellular telephone set, which is excellent in speech communication, and effective in communication through the E-mails and the Internet by means of characters and image information.

Further, in the wrist-mounted portable cellular telephone set of the present invention: the microphone-incorporated portion of the portable section of the phone set is disposed inside the user' s arm; and, the bone conduction loudspeaker is used. Due to this, it is possible for the user to cover his/her mouth with his/her hand palm since the microphone is brought near the user's mouth during the phone communication. This makes it possible for the user to communicate with his/her communication partner without disturbing the persons around the user, and also possible for the user to communicate with his/her partner even when he/she speaks weakly.

Further, in the present invention, the housing provided with the radio transmitting/receiving function is separated from the loudspeaker. Due to this, it is possible to dispose the housing and the loudspeaker in the wrist potion and the fingertip, respectively, in use. Consequently, it is possible for the wrist-mounted portable cellular telephone set of the present invention to reduce adverse influence of electromagnetic waves on the user's brain, which electromagnetic waves are believed to be harmful to a person's brain.

Further, in the portable cellular telephone set of the present invention, it is possible for the user to input data to the portable phone set through its stationary section, which section is provided with both the charging function and the key pad. Due to this, it is possible for the user to use the portable cellular telephone set of the present invention as a fixed-line telephone in his/her home.

## Claims

1. A wrist-mounted portable cellular telephone set comprising: a stationary section, which includes a character input means; and, a wrist-mountable portable section, which forms an independent body separated from said stationary section, wherein said wrist-mountable portable section is provided with all the cellular phone's functions other then those functions provided in said stationary section; **CHARACTERIZED BY** having a construction in which: a character input signal is transmitted from a character input'means to a display panel of said portable section.

2. The wrist-mounted portable cellular telephone set, as set forth in claim 1, wherein properly arranged in said portable section are, in addition to said display panel: a loudspeaker; a microphone; ones of operating switches; and, a battery.

3. The wrist-mounted portable cellular telephone set, as set forth in claim 1 or 2, wherein said display panel is disposed in an inner surface of an upper lid which covers a housing of said portable section.

4. The wrist-mounted portable cellular telephone set, as set forth in claim 3, wherein said display panel is curved at a predetermined radius of curvature.

5. The wrist-mounted portable cellular telephone set, as set forth in any one of claims 1 to 4, wherein said portable section is provided with a band through which said portable section is mounted on a person's wrist.

6. The wrist-mounted portable cellular telephone set, as set forth in claim 5, wherein: a portion, in which said microphone is incorporated, serves also as a lock means of said band.

7. The wrist-mounted portable cellular telephone set, as set forth in any one of claims 3 to 6, wherein said loudspeaker connected with said housing is detachably mounted on said housing or on said band.

8. The wrist-mounted portable cellular telephone set, as set forth in any one of claims 2 to 7, wherein said loudspeaker is constructed of a bone conduction loudspeaker.

9. The wrist-mounted portable cellular telephone set, as set forth in claim 8, wherein said bone conduction loudspeaker is detachably mounted on a person's fingertip.

10. The wrist-mountedportable cellular telephone set, as set forth in any one of claims 2 to 9, wherein said battery is incorporated in said band.

11. Thewrist-mountedportable cellular telephone set, as set forth in claim 1, wherein said stationary section is provided with a charging function.
